# EUROPÄISCHE PATENTSCHRIFT

(11) **EP 3 218 183 B1**
(45) Veröffentlichungstag und Bekanntmachung des Hinweises auf die Patenterteilung: **06.01.2021**
(21) Anmeldenummer: 15801124.7
(22) Anmeldetag: 04.11.2015
(51) Int. Cl.: B32B 5/02, B29C 45/14, B29C 45/16, B32B 5/12, B32B 21/10, B60R 13/02, C08J 5/04, C08J 5/18, C08J 7/04

(54) **VERFAHREN ZUR HERSTELLUNG EINES ZIERTEILS MIT ECHTKARBONOPTIK**
PROCESS FOR THE PREPARATION OF A DECORATIVE PART WITH GENUINE CARBON FIBRE FINISH
PROCÉDÉ DE PRÉPARATION D'UNE PIÈCE DÉCORATIVE AVEC UNE FINITION À L'OPTIQUE FIBRE DE CARBONE AUTHENTIQUE

(30) Priorität: 12.11.2014 DE 102014116483; 22.01.2015 DE 102015100925
(43) Veröffentlichungstag der Anmeldung: 20.09.2017
(73) Patentinhaber: HIB Trim Part Solutions GmbH, 76646 Bruchsal (DE)
(72) Erfinder: KELLER, Bernd, 75045 Walzbachtal-Jöhlingen (DE)
(74) Vertreter: Staeger & Sperling Partnerschaftsgesellschaft mbB
(86) Internationale Anmeldenummer: PCT/EP2015/075729
(87) Internationale Veröffentlichungsnummer: WO 2016/075015

(56) Entgegenhaltungen:
- EP-A2- 1 219 401
- WO-A1-2004/076506
- DE-A1-102009 006 130
- DE-A1-102010 063 751
- DE-C1- 19 723 504
- DE-U1-202004 003 214
- ERWIN BÜRKLE ET AL: "Integrative Verfahrenstechnik: Spritzgießverfahren gestern, heute und morgen", KUNSTSTOFFE, Bd. 2005, Nr. 5, 2005, Seiten 51-56, XP055254451,

## Beschreibung

Die Erfindung betrifft ein Verfahren zur Herstellung eines Zierteils mit Echtkarbonoptik für Fahrzeuge mit einer auf einer Sichtseite des Zierteils angeordneten und von außen erkennbaren Karbonfaserlage.

Karbonfasern und Karbonfaserlagen werden im Kraftfahrzeugbau hauptsächlich für Faserverbundbauteile eingesetzt. Diese bieten den Vorteil hoher Steifigkeit bei geringem Gewicht und dienen als Ersatz oder Ergänzung zu Stahl- und Aluminiumbauteilen. Dabei ist es üblich, dass die Karbonfasern bzw. Karbonfaserlagen ein sog. Sizing (Schlichte) oder eine Imprägnierung auf Basis reaktiver Epoxidharze erhalten, die als Matrixwerkstoff im nachfolgenden Autoklavierprozess radikalisch polymerisiert.

Neben dem Einsatz in Faserverbundbauteilen werden Karbonfasern und Karbonfaserlagen auch als reines Sichtkarbon, beispielsweise bei Zierteilen/Zierblenden im Fahrzeuginnenraum verwendet. Im Gegensatz zu Faserverbundbauteilen werden als Sichtkarbon verwendete Karbonfasern und Karbonfaserlagen, da sie nicht autoklaviert werden, nicht imprägniert, sondern unbehandelt auf eine zumeist aus Kunststoff gebildete Trägerstruktur aufgebracht und mit einer durchsichtigen Decklackschicht überzogen.

Dabei stellte sich als problematisch heraus, dass die Oberfläche der Decklackschicht nach dem Aufbringen stets eine sichtbare Unebenheit (Welligkeit) bzw. Unruhe aufwies, die sich nur durch intensives und zeitaufwändiges Polieren glätten und somit in der Optik verbessern lies. Alternativ musste eine zweite Decklackschicht aufgebracht werden, was jedoch material-, kosten- und zeitintensiv ist, da die erste Lackschicht zunächst trocknen muss.

Es wurde herausgefunden, dass die Unebenheit bzw. Unruhe der Lackschichtoberfläche daher rührt, dass der Klarlack beim Auftragen auf die Karbonfaserlage die zwischen den Karbonfasern bzw. Karbonfaserbündeln liegenden und mit Luft gefüllten Zwischenräume nicht im ausreichenden Maße füllt und diese eingeschlossene Luft während der Trocknungsphase des Lackes mittelbar die Oberflächenqualität beeinflusst. Dabei spielen vor allem Veränderungen des Luftvolumens aufgrund von Temperaturschwankungen oder Luftbewegungen und Ausgasungen eine hervorzuhebende Rolle.

Druckschriftlicher Stand der Technik ist offenbart in den Dokumenten DE 10 2009 006 130 A1, DE 20 2004 003 214 U1, WO 2004/076506 A1 und DE 197 23 504 C1.
Der Erfindung liegt deshalb die Aufgabe zugrunde, ein Verfahren bereit zu stellen, mit dem Zierteile für Kraftfahrzeuge mit Sichtkarbonoptik und verbesserter Oberflächenlackqualität hergestellt werden können.

Diese Aufgabe wird mit einer Merkmalskombination gemäß Patentanspruch 1 und 2 gelöst.

Erfindungsgemäß wird vorgesehen, dass die für eine auf der Sichtseite und von außen sichtbar angeordnete geschlichtete Karbonfaserlage vorab mit einer Polymerdispersion nassimprägniert wird, um das Eindringen des Lacks, insbesondere des Klarlacks in Zwischenräume der Karbonfasern bzw. Karbonfaserbündel zu verbessern und die Neigung der Luft zum Ausgasen zu verringern. Auch kann hierdurch die bisher nötige Primerapplikation entfallen.

Erfindungsgemäß umfasst das Verfahren zur Herstellung des Zierteils mit Echtkarbonoptik mit einer geschlichteten, auf einer Sichtseite des Zierteils angeordneten und von außen erkennbaren Karbonfaserlage, die aus einer Faserstruktur aus vorgefertigten Karbonfasern mit Zwischenräumen gebildet ist, die Verfahrensschritte des Nassimprägnierens der vorgefertigten, geschlichteten Karbonfaserlage mit einer wässrigen Polymerdispersion auf Basis von Polyurethan, Acrylat oder Polyvinylazetat oder einer Mischung hieraus, so dass die Polymerdispersion in die Karbonfaserlage zumindest teilweise eindringt und eine Eignung zum Eindringen eines Lackes in die Zwischenräume der Faserstruktur der Karbonlage erhöht sowie des anschließenden Trocknens der nassimprägnierten Karbonfaserlage. Danach wird die Karbonfaserlage auf einem Zierteilträger mit einer Ausrichtung zur Sichtseite des Zierteils befestigt und eine Lackschicht über die auf dem Zierteilträger angeordnete Karbonfaserlage zur Bildung einer durchsichtigen Oberflächenschicht auf der Sichtseite des Zierteils aufgebracht, so dass der Lack in die Zwischenräume der Karbonfaserlage eindringt.

Die Nassimprägnierung der vorgefertigten, geschlichteten Karbonfaserlage mit der wässrigen Polymerdispersion auf Basis von Polyurethan, Acrylat oder Polyvinylazetat oder einer Mischung hieraus verändert die Oberflächenstruktur der Karbonfasern bzw. der Karbonfaserfilamente, so dass sich der Lack mit der Karbonfaserlage vernetzt, ohne dass Lufteinschlüsse verblieben.

Alternativ zur Nassimprägnierung der gesamten Karbonfaserlage ist eine erfindungsgemäße alternative Ausführung des Verfahrens, eine Nassimprägnierung der vorgefertigten, geschlichteten Karbonfasern mit einer wässrigen Polymerdispersion auf Basis von Polyurethan, Acrylat oder Polyvinylazetat oder einer Mischung hieraus, wobei die nassimprägnierten Karbonfasern anschließend getrocknet und zur Karbonfaserlage gewebt werden, die anschließend identisch zum oben beschriebenen Verfahren verarbeitet wird.

Die zu verwendende wässrige Dispersion auf Basis von Polyurethan, Acrylat oder Polyvinylazetat oder einer Mischung hieraus weist einen Festkörpergehalt von 1 - 70%, weiter bevorzugt von 10 - 60%, weiter bevorzugt von 25 - 50% auf.

Zwar ist es grundsätzlich für Sichtkarbonteile nicht üblich, jedoch ist in einer Ausführungsvariante gleichwohl vorgesehen, dass die Karbonfaserlage vor dem Anordnen auf dem Zierteilträger eine Primerschicht zur Haftungserzeugung erhält.

Zur Nassimprägnierung wird die Karbonfaserlage vorzugsweise herstellungsprozessintegriert durch ein Dispersionsbad gefahren, so dass die Herstellung an einer Fertigungsstraße mit ineinander übergehenden Verfahrensschritten erfolgt. Die Karbonfaserlage wird dabei mit einer Geschwindigkeit von 0,5 - 10m/min, vorzugsweise von 1 - 2 m/min durch das Dispersionsbad befördert und erfolgt dabei über eine Eintauchdauer von 10 - 60s. Die Nassimprägnierung erfolgt in einer Weise, dass die Karbonfaserlage eine Flächengewichtszunahme in Abhängigkeit von dem Gewebetyp von 1 - 50g/m², vorzugsweise 5 bis 20 g/m² erfährt.

Nach der Nassimprägnierung erfolgt der Trockenschritt günstigerweise in einer Trockenstrecke bei einer Temperatur von 20-120°C, besonders bevorzugt von 60 - 120°C. Eine Trockenstrecke ermöglicht wie das Durchfahren des Dispersionsbades die herstellungsprozessintegrierte Trocknung innerhalb derselben Fertigungsstraße.

Die nassimprägnierte und getrocknete Karbonfaserlage wird in einer ersten Alternative durch Aufkaschieren an den Zierteilträger befestigt. In einer zweiten Alternative erfolgt die Befestigung dadurch, dass der Zierteilträger an die Karbonfaserlage im Spritzgießverfahren hinterspritzt wird. Dabei sind ferner zusätzlich dreidimensionale Umformprozesse des Zierteilträgers mit der darauf befestigen Karbonfaserlage integrierbar. Die Nassimprägnierung mit den genannten Polymerdispersionen verbessert dabei ferner die Faser- und Schiebverfestigung und reduziert die Neigung zum Faserbruch der Karbonfasern bei Kaschier- und Umformprozessen.

Das Aufbringen der Lackschicht erfolgt in einer vorteilhaften Ausführungsvariante durch Übergießen der Karbonfaserlage. Die Lackschicht ist günstigerweise aus einem Zweikomponenten Polyurethan-Gießsystem gebildet, wobei sowohl aromatische oder aliphatische sowie lichtechte und nichtlichtechte Polyurethanlacke einsetzbar sind.

Das Verfahren ist besonders kostengünstig ausführbar wenn Karbonfasern als Einzelfasern oder als Faserbündel bzw. das Karbonfasergewebe als Rollenware herstellungsprozessintegriert verarbeitet wird, d.h. von einer Rolle abgezogen, nassimprägniert, getrocknet und entweder wieder auf eine Rolle aufgewickelt oder unmittelbar zur Anordnung der Karbonfaserlage auf dem Zierteilträger entsprechend der Größe des Zierteilträgers zurechtgeschnitten wird.

In einer weiteren Ausführungsvariation ist vorgesehen, dass die Karbonfaserlage zusätzlich ein Stützgewebe aufweist, so dass die Karbonfaserlage leichter verarbeitbar und auf dem Zierteilträger positionier bar ist.

Zusätzlich zu den Verfahrensschritten erfolgen mögliche Schritte wie das Befräsen des Zierteils nach dem Aufbringen des Lacks sowie das Polieren der Oberfläche, wobei der aufgrund der Anwendung des Verfahrens gemäß der Erfindung benötigte Polieraufwand um ein Vielfaches verringert ist.

Andere vorteilhafte Weiterbildungen der Erfindung sind in den Unteransprüchen gekennzeichnet. Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise kann das Kaschieren der Karbonfaserlage händisch oder maschinell erfolgen. Der Zierteilträger kann aus Spritzguss oder Holzlaminat sein.

## Patentansprüche

1. Verfahren zur Herstellung eines Zierteils mit Echtkarbonoptik für Fahrzeuge mit einer auf einer Sichtseite des Zierteils angeordneten und von außen erkennbaren, geschlichteten Karbonfaserlage, die aus einer Faserstruktur aus vorgefertigten Karbonfasern mit Zwischenräumen gebildet ist, umfassend die Verfahrensschritte:
- Nassimprägnieren der vorgefertigten, geschlichteten Karbonfaserlage mit einer wässrigen Polymerdispersion auf Basis von Polyurethan, Acrylat oder Polyvinylazetat oder einer Mischung hieraus, so dass die Polymerdispersion in die Karbonfaserlage zumindest teilweise eindringt und eine Eignung zum Eindringen eines Lackes in die Zwischenräume der Faserstruktur der Karbonlage erhöht,
- Trocknen der nassimprägnierten Karbonfaserlage,
- Befestigendes Anordnen der Karbonfaserlage auf einem Zierteilträger mit einer Ausrichtung zur Sichtseite des Zierteils,
- Aufbringen einer Lackschicht über die auf dem Zierteilträger angeordnete Karbonfaserlage zur Bildung einer durchsichtigen Oberflächenschicht auf der Sichtseite des Zierteils, wobei Lack in die Zwischenräume der Karbonfaserlage eindringt.

2. Verfahren zur Herstellung eines Zierteils mit Echtkarbonoptik für Fahrzeuge mit einer auf einer Sichtseite des Zierteils angeordneten und von außen erkennbaren, geschlichteten Karbonfaserlage, die aus einer Faserstruktur aus vorgefertigten Karbonfasern mit Zwischenräumen gebildet ist, umfassend die Verfahrensschritte:
- Nassimprägnieren der vorgefertigten, geschlichteten Karbonfasern mit einer wässrigen Polymerdispersion auf Basis von Polyurethan, Acrylat oder Polyvinylazetat oder einer Mischung hieraus, so dass die Polymerdispersion in die Karbonfasern zumindest teilweise eindringt und eine Eignung zum Eindringen eines Lackes in die Zwischenräume der Faserstruktur der Karbonlage erhöht,
- Trocknen der nassimprägnierten Karbonfasern,
- Weben der Karbonfaserlage aus den nassimprägnierten und getrockneten Karbonfasern,
- Befestigendes Anordnen der Karbonfaserlage auf einem Zierteilträger mit einer Ausrichtung zur Sichtseite des Zierteils,
- Aufbringen einer Lackschicht über die auf dem Zierteilträger angeordnete Karbonfaserlage zur Bildung einer durchsichtigen Oberflächenschicht auf der Sichtseite des Zierteils, wobei Lack in die Zwischenräume der Karbonfaserlage eindringt.

3. Verfahren nach Anspruch 1 oder 2, **dadurch gekennzeichnet, dass** die wässrige Dispersion einen Festkörpergehalt von 1 - 70%, insbesondere von 10 - 50% aufweist.

4. Verfahren nach einem der vorigen Ansprüche, **dadurch gekennzeichnet, dass** die Karbonfaserlage vor dem Anordnen auf dem Zierteilträger eine Primerschicht zur Haftungserzeugung erhält.

5. Verfahren nach einem der vorigen Ansprüche, **dadurch gekennzeichnet, dass** das Trocknen in einer Trockenstrecke bei einer Temperatur von 20-120°C, insbesondere von 60-120°C, bis zu einer Restfeuchte von unter 1% erfolgt.

6. Verfahren nach einem der vorigen Ansprüche, **dadurch gekennzeichnet, dass** die Karbonfaserlage durch Aufkaschieren an den Zierteilträger befestigt wird.

7. Verfahren nach einem der vorigen Ansprüche, **dadurch gekennzeichnet, dass** der Zierteilträger an die Karbonfaserlage hinterspritzt wird.

8. Verfahren nach einem der vorigen Ansprüche, **dadurch gekennzeichnet, dass** die Lackschicht durch Übergießen der Karbonfaserlage aufgebracht wird.

9. Verfahren nach einem der vorigen Ansprüche, **dadurch gekennzeichnet, dass** die Karbonfaserlage herstellungsprozessintegriert zum Nassimprägnieren durch ein Dispersionsbad gefahren wird.

10. Verfahren nach dem vorigen Ansprüche, **dadurch gekennzeichnet, dass** die Karbonfaserlage mit einer Geschwindigkeit von 0,5 - 10m/min, insbesondere von 1 - 2 m/min durch das Dispersionsbad befördert wird und dabei eine Eintauchdauer von 10 - 60s erfährt.

11. Verfahren nach einem der vorigen Ansprüche, **dadurch gekennzeichnet, dass** die Karbonfaserlage aus Einzelfasern, Faserbündeln oder einem Karbonfasergewebe gebildet ist.

12. Verfahren nach dem vorigen Anspruch, **dadurch gekennzeichnet, dass** die Einzelfasern, die Faserbündel oder das Karbonfasergewebe als Rollenware herstellungsprozessintegriert nassimprägniert und anschließend zur Anordnung der Karbonfaserlage auf dem Zierteilträger entsprechend der Größe des Zierteilträgers zurechtgeschnitten werden.

13. Verfahren nach einem der vorigen Ansprüche, **dadurch gekennzeichnet, dass** die Lackschicht aus einem Zweikomponenten Polyurethan gebildet ist.

14. Verfahren nach einem der vorigen Ansprüche, **dadurch gekennzeichnet, dass** die Karbonfaserlage zusätzlich ein Stützgewebe aufweist.

## Claims

1. Method for producing a trim part having a genuine carbon look for vehicles with a carbon fibre sheet arranged on a visible side of the trim part and recognisable from the outside, which is formed from a fibre structure of prefabricated carbon fibres with interspaces, comprising the method steps:
- wet impregnation of the prefabricated, sized carbon fibres with an aqueous polymer dispersion based on polyurethane, acrylate or polyvinyl acetate or a mixture thereof, so that the polymer dispersion penetrates at least partially into the carbon fibres and increases a suitability for penetration of a lacquer into the interspaces of the fibre structure of the carbon sheet
- Drying of the wet-impregnated carbon fibers,
- Fastening arrangement of the carbon fiber sheet on a trim part support with an alignment to the visible side of the trim part,
- Application of a lacquer layer over the carbon fiber sheet arranged on the trim part support to form a transparent surface layer on the visible side of the trim part, wherein lacquer penetrates into the interspaces of the carbon fiber sheet.

2. Method for producing a trim part having a genuine carbon look for vehicles with a carbon fibre sheet arranged on a visible side of the trim part and recognisable from the outside, which is formed from a fibre structure of prefabricated carbon fibres with interspaces, comprising the method steps:
- wet impregnation of the prefabricated, sized carbon fibres with an aqueous polymer dispersion based on polyurethane, acrylate or polyvinyl acetate or a mixture thereof, so that the polymer dispersion penetrates at least partially into the carbon fibres and increases a suitability for penetration of a lacquer into the interspaces of the fibre structure of the carbon sheet
- Drying of the wet-impregnated carbon fibers,
- Weaving of the carbon fiber sheet from the wet-impregnated and dried carbon fibers,
- Fastening arrangement of the carbon fiber sheet on a trim part support with an alignment to the visible side of the trim part,
- Application of a lacquer layer over the carbon fiber sheet arranged on the trim part support to form a transparent surface layer on the visible side of the trim part, wherein lacquer penetrates into the interspaces of the carbon fiber sheet.

3. Method according to claim 1 or 2, **characterized in that** the aqueous dispersion has a solids content of 1 - 70%, in particular of 10 - 50%.

4. Method according to one of the preceding claims, **characterized in that** the carbon fiber sheet receives a primer layer for adhesion generation prior to the arrangement on the trim part support.

5. Method according to one of the preceding claims, **characterized in that** the drying is carried out in a drying line at a temperature of 20-120°C, in particular 60-120°C, to a residual moisture content of less than 1%.

6. Method according to one of the preceding claims, **characterized in that** the carbon fibre sheet is attached to the trim part support by lamination.

7. Method according to one of the preceding claims, **characterized in that** the trim part support is back-injected onto the carbon fiber sheet.

8. Method according to one of the preceding claims, **characterized in that** the lacquer layer is applied by overmoulding the carbon fibre sheet.

9. Method according to one of the preceding claims, **characterized in that** the carbon fiber sheet is transported through a disperse bath for wet impregnation in an integrated manufacturing process.

10. Process according to the preceding claim, **characterized in that** the carbon fibre sheet is conveyed through the dispersion bath at a speed of 0.5 - 10 m/min, in particular of 1 - 2 m/min, and receives an immersion time of 10 - 60s.

11. Method according to one of the preceding claims, **characterized in that** the carbon fiber sheet is formed from single fibers, fiber bundles or a carbon fiber fabric.

12. Method according to the preceding claim, **characterized in that** the individual fibers, the fiber bundles or the carbon fiber fabric are wet-impregnated as a roll material integrated in the production process and then cut to size to arrange the carbon fiber layer on the trim part support according to the size of the trim support.

13. Method according to one of the preceding claims, **characterized in that** the lacquer layer is formed from a two-component polyurethane.

14. Method according to one of the previous claims, **characterized in that** the carbon fibre sheet additionally has a supporting fabric.

## Revendications

1. Procédé de préparation d'une pièce décorative avec une finition à l'optique fibre de carbone authentique avec une couche de fibres de carbone encollée agencée sur un côté visuel de la pièce décorative et identifiable de l'extérieur, qui est formée d'une structure de fibres constituée de fibres de carbone préfabriquées avec des espaces intermédiaires, comprenant les étapes de procédé consistant à :
- imprégner à l'état humide la couche de fibres de carbone préfabriquée encollée avec une dispersion aqueuse de polymère à base de polyuréthane, d'acrylate ou de poly (acétate de vinyle) ou d'un mélange de ceux-ci en sorte que la dispersion de polymère pénètre au moins en partie dans la couche de fibres de carbone et qu'une aptitude à la pénétration d'un vernis dans les espaces intermédiaires de la structure de fibres de la couche de carbone augmente,
- sécher la couche de fibres de carbone imprégnée à l'état humide,
- agencer par fixation la couche de fibres de carbone sur un support de la pièce décorative avec un alignement sur le côté visuel de la pièce décorative,
- appliquer une couche de vernis sur la couche de fibres de carbone agencée sur le support de la pièce décorative pour former une couche superficielle transparente sur le côté visuel de la pièce décorative, dans lequel le vernis pénètre dans les espaces intermédiaires de la couche de fibres de carbone.

2. Procédé de préparation d'une pièce décorative avec une finition à l'optique fibre de carbone authentique pour véhicules avec une couche de fibres de carbone encollée agencée sur un côté visuel de la pièce décorative et identifiable de l'extérieur, qui est formée d'une structure de fibres constituée de fibres de carbone préfabriquées avec des espaces intermédiaires, comprenant les étapes de procédé consistant à :
- imprégner à l'état humide les fibres de carbone préfabriquées encollées avec une dispersion aqueuse de polymère à base de polyuréthane, d'acrylate ou de poly (acétate de vinyle) ou d'un mélange de ceux-ci en sorte que la dispersion de polymère pénètre au moins en partie dans les fibres de carbone et qu'une aptitude à la pénétration d'un vernis dans les espaces intermédiaires de la structure de fibres de la couche de carbone augmente,
- sécher les fibres de carbone imprégnées à l'état humide,
- tisser la couche de fibres de carbone à partir des fibres de carbone imprégnées à l'état humide et séchées,
- agencer par fixation la couche de fibres de carbone sur un support de pièce décorative avec un alignement sur le côté visuel de la pièce décorative,
- appliquer une couche de vernis sur la couche de fibres de carbone agencée sur le support de la pièce décorative pour former une couche superficielle transparente sur le côté visuel de la pièce décorative, dans lequel le vernis pénètre dans les espaces intermédiaires de la couche de fibres de carbone.

3. Procédé selon la revendication 1 ou 2, **caractérisé en ce que** la dispersion aqueuse présente une teneur en solides de 1 à 70 %, en particulier de 10 à 50 %.

4. Procédé selon l'une quelconque des revendications précédentes, **caractérisé en ce que** la couche de fibres de carbone contient, avant l'agencement sur le support de la pièce décorative, une couche de fond génératrice d'adhérence.

5. Procédé selon l'une quelconque des revendications précédentes, **caractérisé en ce que** le séchage se fait dans une section de séchage à une température de 20 à 120°C, en particulier de 60 à 120°C, jusqu'à atteindre une humidité résiduaire en dessous de 1 %.

6. Procédé selon l'une quelconque des revendications précédentes, **caractérisé en ce que** la couche de fibres de carbone est fixée par contrecollage sur le support de la pièce décorative.

7. Procédé selon l'une quelconque des revendications précédentes, **caractérisé en ce que** le support de la pièce décorative est injecté au verso sur la couche de fibres de carbone.

8. Procédé selon l'une quelconque des revendications précédentes, **caractérisé en ce que** la couche de vernis est appliquée par coulée sur la couche de fibres de carbone.

9. Procédé selon l'une quelconque des revendications précédentes, **caractérisé en ce que** la couche de fibres de carbone est acheminée intégrée au processus de préparation pour l'imprégnation à l'état humide à travers un bain de dispersion.

10. Procédé selon la revendication précédente, **caractérisé en ce que** la couche de fibres de carbone est acheminée à travers le bain de dispersion à une vitesse de 0,5 à 10 m/min, en particulier de 1 à 2 m/min, et présente en l'occurrence une durée d'immersion de 10 à 60 s.

11. Procédé selon l'une quelconque des revendications précédentes, **caractérisé en ce que** la couche de fibres de carbone est formée de fibres individuelles, de faisceaux de fibres ou d'un tissu de fibres de carbone.

12. Procédé selon la revendication précédente, **caractérisé en ce que** les fibres individuelles, les faisceaux de fibres ou le tissu de fibres de carbone sont imprégnés à l'état humide intégrés au processus de préparation sous la forme de rouleaux et sont ensuite débités pour agencer la couche de fibres de carbone sur le support de la pièce décorative en fonction de la grandeur du support de la pièce décorative.

13. Procédé selon l'une quelconque des revendications précédentes, **caractérisé en ce que** la couche de vernis est formée d'un polyuréthane à deux composants.

14. Procédé selon l'une quelconque des revendications précédentes, **caractérisé en ce que** la couche de fibres de carbone présente en outre un tissu de soutien.
